# EUROPÄISCHE PATENTSCHRIFT

(11) **EP 1 346 205 B1**
(45) Veröffentlichungstag und Bekanntmachung des Hinweises auf die Patenterteilung: **25.04.2007**
(21) Anmeldenummer: 01989604.2
(22) Anmeldetag: 18.12.2001
(51) Int. Cl.: G01N 21/90, G01N 21/88, B07C 5/34

(54) **VERFAHREN UND VORRICHTUNG ZUR OPTISCHEN INSPEKTION VON FLASCHEN**
METHOD AND DEVICE FOR OPTICALLY INSPECTING BOTTLES
PROCEDE ET DISPOSITIF D'INSPECTION OPTIQUE DE BOUTEILLES

(30) Priorität: 29.12.2000 DE 10065290
(43) Veröffentlichungstag der Anmeldung: 24.09.2003
(73) Patentinhaber: KRONES AG, 93068 Neutraubling (DE)
(72) Erfinder: LINDNER, Peter, 93437 Furth im Wald (DE)
(86) Internationale Anmeldenummer: PCT/EP2001/014972
(87) Internationale Veröffentlichungsnummer: WO 2002/054051

(56) Entgegenhaltungen:
- EP-A- 0 047 936
- EP-A- 0 336 476
- EP-A- 0 387 930
- EP-A- 0 952 443
- US-A- 3 987 301
- US-A- 4 213 042
- US-B1- 6 424 414
- "Technical Information: Xenon Flash Lamps" April 1999 (1999-04), HAMAMATSU PHOTONICS K.K. , JAPAN * das ganze Dokument *

## Beschreibung

Die Erfindung betrifft ein Verfahren und eine Vorrichtung zur optischen Inspektion von Flaschen in einer Inspektionsstation, welche mindestens eine Kamera zum Aufnehmen von Bildern einer Flasche oder eines Flaschenteils und zumindest eine Beleuchtungseinheit, die mindestens eine Flasche oder einen Flaschenteil beleuchtet, umfasst.

Bei der Herstellung von Flaschen oder bei der Wiederverwendung von Flaschen werden diese mittels optischer Inspektionseinheiten überprüft. Unter dem Begriff Inspektionsstation ist hierbei eine räumlich abgegrenzte Einheit zu verstehen, in der auf möglichst engem Raum Inspektionsschritte an einer Flasche durchgeführt werden. Eine Maschine zur Flaschenkontrolle kann mehrere solcher Inspektionsstationen räumlich getrennt voneinander enthalten. Hierbei geht es darum, Risse, Sprünge, Absplitterungen, Scuffing oder Verschmutzungen an Flaschen zu erkennen, um diese von der weiteren Verwendung auszuschließen. Scuffing bedeutet hierbei eine Abnutzung oder Abwetzung des Flaschenkörpers oder der Mündungsdichtfläche, die durch Reibung einer Flasche mit anderen Flaschen, mit einem Flaschenbehälter, wie Getränkekästen oder sonstigen Gegenständen entstehen können.

Von besonderem Interesse ist hierbei eine Inspektion des Flaschenbodens in Bezug auf Verschmutzungen sowie der Mündungsdichtfläche in Bezug auf Absplitterungen. Solche Verletzungen der Mündungsdichtfläche führen dazu, dass ein gasdichtes Verschließen einer Flasche mit beispielsweise einem Kronkorken oder einem Schraubverschluss nicht sicher gewährleistet ist, weil die Absplitterung ein abdichtendes Aufdrücken eines Verschlusses auf die Mündungsdichtfläche verhindern.

Eine Kontrolle von Absplitterungen im Bereich der Mündungsdichtfläche ist auch im Hinblick auf mögliche Verletzungsgefahren ausgehend von scharfen Kanten im Bereich der Absplitterung ein wichtiger Verfahrensschritt.

Eine geeignete Inspektionsvorrichtung ist aus EP 0 336 476 A1 bekannt. Die Mündungsdichtfläche einer Flasche wird von oben beleuchtet und von einer Kamera abgebildet.

Im allgemeinen werden die verschiedenen Inspektionsschritte, z.B. zur Inspektion des Flaschenbodens und/oder der Mündungsdichtfläche, nacheinander in verschiedenen, jeweils dafür ausgerüsteten und räumlich beabstandeten Inspektionseinheiten durchgeführt. Dies bringt jedoch den Nachteil mit sich, dass sich insgesamt eine aufwändige Konstruktion mit entsprechdendem Raumbedarf für die vollständige Inspektion der Flaschen ergibt. Hierbei ist zu beachten, dass eine komplett bestückte Flascheninspektionsmaschine eine Vielzahl weiterer Inspektionsstationen für Gewindekontrolle, Restflüssigkeitserkennung, Seitenwandkontrolle etc. aufweisen kann, wodurch sich eine beträchtliche Baulänge ergeben kann.

Um diese Nachteile zu umgehen, sind gattungsgemäße Verfahren bekannt, bei denen zwei Inspektionsschritte gleichzeitig durchgeführt werden. Dabei wird beispielsweise mit einer Lampe der Flaschenboden einer Flasche beleuchtet. Durch Zwischenschaltung einer Blende und einer dahinter angeordneten Kamera wird ein Bild des Flaschenbodens aufgenommen. Mit Hilfe eines Strahlteilers und weiteren Blenden wird eine zweite Kamera eingesetzt, die gleichzeitig ein Bild der Mündungsdichtfläche aufnimmt.

Eine entsprechende Inspektionsvorrichtung ist aus EP 0 047 936 A1 bekannt. Mit ihr können zwei Unterschiedliche Bereiche einer Flasche in mit einer Inspektionsstation allein mit einer Kamera und zwei Beleuchtungseinrichtungen überprüft werden. Nachteilig ist die begrenzte Bildauflösung, sowie eine ungünstige Beeinflussung der Abbildung durch den Simultanbetrieb beider Beleuchtungssysteme.

Insbesondere eine Kontrolle der Außenseite der Mündungsdichtfläche gleichzeitig mit einer Kontrolle der Innenseite der Mündungsdichtfläche gestaltet sich problematisch. Zur Kontrolle der Außenseite der Mündungsdichtfläche wird eine ringförmige Beleuchtungseinheit verwendet, die die Außenseite der Mündungsdichtfläche beleuchtet. Zur Inspektion der Innenseite der Mündungsdichtfläche wird die Flasche von oben auf die Mündungsdichtfläche hin beleuchtet. Etwaige Absplitterungen im Bereich der Mündungsdichtfläche können nur unzureichend erkannt werden, da sich bei gleichzeitiger Beleuchtung der Mündungsdichtfläche aus verschiedenen Richtungen nur ein unzureichender Kontrast ergibt.

Aus EP 0 952 443 A1 ist eine Inspektionsvorrichtung mit einer Vielzahl von über einem Drehteller für zu prüfende Flaschen sphärisch angeordneten Lichtquellen und Kameras bekannt.

Um eine vollständige Mündungskontrolle ausführen zu können, muss eine Flasche einmal um ihre Hochachse gedreht und dabei mehrfach von allen Kameras abgebildet werden. Die einzelnen Lichtquellen sind wiederholt sukzessive ansteuerbar. Damit ist eine Kontrastverbesserung erreicht.

Aufgabe der vorliegenden Erfindung ist es daher, ein Verfahren und eine Vorrichtung zur optischen Inspektion von Flaschen zu schaffen, welche eine umfassende Inspektion einer Flasche sicher gewährleistet ohne dabei räumlich ausladende Konstruktionen zu verwenden.

Diese Aufgabe wird durch eine Vorrichtung mit den Merkmalen des Anspruchs 1 und ein Verfahren mit den Merkmalen des Anspruchs 12 gelöst.

Bei einer Vorrichtung wird mit mindestens einer Beleuchtungseinheit eine Flasche oder ein Teil einer Flasche beleuchtet sowie mit mindestens einer Kamera mindestens ein Bild einer Flasche oder ein Teil einer Flasche aufgenommen. Dabei sind die Einrichtungen zur Inspektion der Flasche so gestaltet, dass einige Inspektionsschritte, insbesondere solche die sich gegenseitig stören können, insbesondere durch die dafür erforderliche Beleuchtung zu verschiedenen Zeitpunkten erfolgen, jedoch derart, dass diese Zeitpunkte möglichst dicht hintereinander liegen. Dadurch ist es vorteilhafterweise möglich, mehrere Inspektionen unmittelbar aufeinanderfolgend auszuführen, die sich nicht gegenseitig beeinflussen, diese verschiedenen Inspektionsschritte jedoch in einer einzigen, sehr kompakten Inspektionsstation vornehmen zu können.

Vorteilhafterweise wird die Inspektion einer Flasche, bestehend aus mehreren Inspektionsschritten abgeschlossen, bevor mit der Inspektion einer weiteren Flasche begonnen wird. Dadurch wird eine einfache Steuerung des Mechanismus erreicht, der eine defekte Flasche aussortieren soll, da zu einem Zeitpunkt immer nur eine einzelne Flasche begutachtet wird und eine eindeutige Ergebniszuordnung gewährleistbar ist.

Vorteilhafterweise ist die Vorrichtung zur optischen Inspektion von Flaschen derart ausgebildet, dass mindestens eine Kamera Bilder von der Mündungsdichtfläche einer Flasche macht. Bilder von der Mündungsdichtfläche sind insbesondere für die Begutachtung der Güte der Mündungsdichtfläche erforderlich.

Eine Weiterführung der Erfindung umfasst mindestens eine Kamera zur Aufnahme von Bildern des Bodens der selben Flasche. Gerade bei der Wiederverwendung von Flaschen befinden sich nach dem Reinigen und Spülen von Flaschen am Flaschenboden evtl. Schmutzrückstände oder Beschädigungen. Diese können mit einer Kamera, welche Bilder von dem Boden einer Flasche aufnimmt, sicher erkannt werden.

Eine vorteilhafte Weiterführung der Erfindung besteht darin, eine Beleuchtungseinheit vorzusehen, die den Flaschenboden ganz oder teilweise beleuchtet. Eine Beleuchtung des Flaschenbodens, insbesondere im Durchlichtverfahren, gestattet die sichere Detektion von Schmutzrückständen am Flaschenboden. Weiterhin erlaubt jedoch eine Beleuchtung des Flaschenbodens ggf. eine Inspektion von anderen oder weiteren Flaschenteilen als den Flaschenboden. Dies ist darauf zurückzuführen, dass die Flaschenwand bei entsprechender Lichteinstrahlung als ein Lichtleiter funktioniert und das Licht vom Flaschenboden bis zur Mündungsdichtfläche leitet. So können auch bei Beleuchtung des Flaschenbodens auch bestimmte Defekte in der Mündungsdichtfläche der Flasche festgestellt werden.

Die Vorrichtung zur optischen Inspektion von Flaschen wird mit einer ringförmigen Beleuchtungseinheit versehen, die die Mündungsdichtfläche, insbesondere den äußeren Bereich der Mündungsdichtfläche, beleuchtet. Die Ausbildung einer ringförmigen Beleuchtungseinheit hat den Vorteil, dass durch die mittenfreie Öffnung der Beleuchtungseinheit hindurch Bilder von der Mündungsdichtfläche mit einer Kamera aufgenommen werden können, insbesondere von oben. Eine solche ringförmige Beleuchtungseinheit gewährleistet eine homogene gleichförmige Ausleuchtung der Mündungsdichtflächenaußenseite.

Die Erfindung besteht darin, eine Beleuchtungseinheit vorzusehen, welche die Mündungsdichtfläche im Wesentlichen senkrecht von oben beleuchtet. Das Licht einer solchen Beleuchtungseinheit kann beispielsweise über einen halbdurchlässigen Spiegel in Richtung senkrecht auf die Mündungsdichtfläche hin gelenkt werden. Eine Beleuchtung der Mündungsdichtfläche aus einer Richtung senkrecht zur Mündungsdichtfläche erlaubt insbesondere die Inspektion der Innenseite der Mündungsdichtfläche. Absplitterungen oder sonstige Defekte, gerade im Bereich der Innenseite der Mündungsdichtfläche, sind mit anderen Verfahren nur schwer darstellbar.

Eine wesentliche Weiterführung der erfindungsgemäßen Vorrichtung besteht darin, eine Einrichtung vorzusehen, die die Flaschen relativ zu den optischen Inspektionseinheiten bewegt. Ein Vorteil einer solchen Einrichtung ist, dass die Flaschen der optischen Inspektionseinheit zugeführt, innerhalb der optischen Inspektionseinheit zu den verschiedenen Positionen, an den verschiedene Inspektionsschritte durchgeführt werden, hingeführt und abschließend von der Inspektionseinheit weggeführt werden können.

Vorteilhafterweise handelt es sich bei der Einrichtung, die die Flaschen relativ zu der Vorrichtung zur optischen Inspektion bewegt, um eine so ausgestattete Einrichtung, dass die Flaschen kontinuierlich durch die Vorrichtung zur optischen Inspektion bewegt werden. Dies erlaubt eine relativ einfache Konstruktion der Einrichtung, welche die Flaschen bewegt. Die konstruktive Ausführung hängt davon ab, ob neben einer reinen Mündungsinspektion auch eine Bodeninspektion erfolgen soll. Zur Mündungsinspektion kann ein einfaches, die Flaschen am Boden unterstützendes Förderband genügen, während für eine Bodenkontrolle an der Flaschenseitenwand angreifende Klemmriemen oder Greifklammern vorteilhaft sind.

Eine vorteilhafte Weiterentwicklung der Erfindung besteht darin, die Vorrichtung zur optischen Inspektion von Flaschen so auszuführen, dass auf eine einzelne Kamera das Licht von zwei verschiedenen Belichtungspositionen innerhalb der Inspektionseinheit geführt wird. Dadurch ist es möglich, mit einer einzelnen Kamera Bilder verschiedener Inspektionsvorgänge bzw. -perspektiven zu gewinnen. Der Einsatz einer einzelnen Kamera hierfür stellt eine bauliche Erleichterung der Erfindung dar, welche sich vor allem auch kostenreduzierend auswirkt.

Vorteilhafterweise ist hierfür ein Strahlteiler vorgesehen, welcher das Licht von einer dieser räumlich verschiedenen Positionen der Kamera zuführt ohne dabei den Strahlengang einer anderen Inspektionsposition zu der Kamera hin völlig abzuschatten.

Eine weitere vorteilhafte Möglichkeit, verschiedene Inspektionsvorgänge kostengünstig durchzuführen besteht darin, eine Kamera so vorzusehen, dass im Bildbereich der Kamera mindestens zwei verschiedene Positionen für zwei verschiedene Inspektionsvorgänge angeordnet sind. Bei Bewegung der Flasche innerhalb der optischen Inspektionseinheit müssen dazu die zwei Bilder, die für solche Inspektionsvorgänge aufgenommen werden, in einem zeitlich möglichst dichten Abstand aufgenommen werden, so dass die Flasche durch ihre Bewegung den Bildbereich einer Kamera nicht vorzeitig verlässt. Dadurch können vorteilhafterweise mit einer einzelnen Kamera ohne weitere optische Elemente verschiedene Inspektionen durchgeführt werden.

Eine weitergehende vorteilhafte Ausbildung der Erfindung besteht darin, in der Vorrichtung zur optischen Inspektion von Flaschen eine ringförmige Beleuchtungseinheit so vorzusehen, dass durch die ringförmige Öffnung der Beleuchtungseinheit hindurch mehrere Inspektionsschritte hintereinander durchgeführt werden können. Dies ist sowohl möglich bei Verwendung einer einzelnen Kamera, welche beispielsweise mehrere Bilder durch die ringförmige Öffnung hindurch aufnimmt, als auch unter Verwendung von mehreren Kameras, welche durch die ringförmige Öffnung hindurch Bilder von der Flasche aufnehmen. Die Ausbildung der ringförmigen Beleuchtungseinheit ist derart, dass durch ihre Öffnung hindurch mehrere Inspektionsschritte (z.B. Mündungs- und Bodenkontrolle) durchgeführt werden können. Dies erlaubt eine besonders kompakte Bauweise der Inspektionsstation, welche aus o.g. Gründen einen besonderen Vorteil darstellt. Werden die Flaschen durch die optische Inspektionseinheit hindurch bewegt, ist das insbesondere bei einer solchen Ausführungsform von Vorteil, die unterschiedliche Inspektionsschritte zu verschiedenen, jedoch möglichst dicht hintereinander liegenden Zeiten erfolgen zu lassen.

Bei dem erfindungsgemäßen Verfahren zur optischen Inspektion von Flaschen werden nacheinander die Schritte nach Anspruch 12 durchgeführt. Zunächst wird eine Flasche einer optischen Inspektionseinheit zugeführt, anschließend werden zu mindestens zwei verschiedenen, jedoch möglichst dicht hintereinander liegenden Zeitpunkten verschiedene Inspektionsvorgänge von mindestens einer Flasche oder einem Flaschenteil in besagter Inspektionseinheit durchgeführt. Abschließend wird die Flasche von der optischen Inspektionseinheit weggeführt, um so Platz für eine nachfolgende Flasche zu schaffen. Die Durchführung der verschiedenen Inspektionsschritte zu verschiedenen Zeitpunkten hat den Vorteil, dass sich die verschiedenen Inspektionsschritte nicht gegenseitig beeinflussen können. Jeder Inspektionsschritt für sich kann in Bezug auf Kontrast, Lichtausbeute etc. einzeln optimiert werden. Die Durchführung der Inspektionsschritte zeitlich möglichst dicht hintereinanderliegend ermöglicht eine schnelle, umfassende und sichere Begutachtung einer einzelnen Flasche.

Bei dem Verfahren zur optischen Inspektion von Flaschen ist es von Vorteil, die Begutachtung einer Flasche bezüglich ihrer Tauglichkeit zur weiteren Verwendung mit den optischen Inspektionsmethoden vollständig abzuschließen bevor mit der Begutachtung einer weiteren Flasche begonnen wird. Der Vorteil ergibt sich daraus, dass so nur eine einzelne Einrichtung vorgesehen sein muss, welche eine defekte oder verschmutzte Flasche aussortiert. Ein Mitverfolgen einer Flasche beim Durchlaufen verschiedener Inspektionsstationen kann entfallen.

Hierbei wird ein Verfahren, bei dem die Mündungsdichtfläche d.H. die Innen- und Außenseite der Mündungsdichtfläche untersucht werden vorgesehen.

Weiterhin von Vorteil sind Verfahren, bei denen der Boden der Flasche ganz oder teilweise, die Mündungsdichtfläche mit einer ringförmigen Beleuchtungseinheit sowie die Mündungsdichtfläche aus einer Richtung im Wesentlichen senkrecht zu ihrer Oberfläche beleuchtet wird.

Das Verfahren zur optischen Inspektion von Flaschen besteht darin, eine Flasche oder ein Flaschenteil jeweils von zwei verschiedenen Beleuchtungseinheiten zeitlich nacheinander zu beleuchten. Die Beleuchtung zu verschiedenen Zeitpunkten hat den Vorteil, dass jede Beleuchtung für sich bei Defekten an der Flasche im Kamerabild maximalen Kontrast erzeugt. Weiterhin ist es möglich, die Beleuchtungseinheiten derart zu gestalten, und räumlich in Flaschenförderrichtung überlappend versetzt anzuordnen, dass sehr kurze Lichtpulse, wie z.B. Lichtblitze verwendet werden und so die verschiedenen Inspektionsschritte in zeitlich extrem dichter Reihenfolge durchgeführt werden können.

Dadurch ergibt sich insbesondere der Vorteil, dass mit einer einzelnen Kamera zwei Bilder von ein und derselben Flasche oder ein und demselben Flaschenteil mit mindestens zwei verschiedenen Beleuchtungen aufgenommen werden können. Gerade durch die Verwendung nur einer einzelnen Kamera ist eine sehr kompakte Bauweise der optischen Inspektionsstation durchführbar. Eine weitere erfindungsgemäße Fortführung des Verfahrens besteht darin, mit zwei Kameras Bilder von ein und derselben Flasche aufzunehmen, wobei die Flasche jeweils verschieden beleuchtet wird. Dabei kann jede Kamera auf einen anderen oder auch auf ein und denselben Flaschenteil gerichtet sein und durch die zu verschiedenen Zeiten stattfindenden Beleuchtungen Bilder mit maximalem Kontrast aufnehmen.

Besonders vorteilhaft ist hierbei, wenn zwei verschiedene Inspektionsschritte innerhalb von einem Zeitintervall von nicht mehr als 50 Millisekunden durchgeführt werden. Dadurch ist es möglich, die Inspektion einer einzelnen Flasche möglichst zügig abzuschließen bevor mit der Inspektion einer weiteren Flasche begonnen wird.

Insbesondere von Vorteil ist es hierbei, wenn die Flaschen relativ zu der optischen Inspektionseinheit bewegt werden. Bei Durchführen von verschiedenen Inspektionsschritten innerhalb von 50 Millisekunden können die Flaschen mit einer Geschwindigkeit von mehreren Metern pro Sekunde durch die optische Inspektionseinheit hindurch bewegt werden.

Von Vorteil ist hierbei, wenn die Flaschen kontinuierlich durch die optische Inspektionseinheit hindurch bewegt werden, weil dadurch ein Abbremsen und Beschleunigen der Flaschen nicht erforderlich ist und hohe Durchsatzleistungen erreichbar sind.

Von Vorteil ist hierbei ein Verfahren, bei dem eine einzelne Kamera Bilder von ein und derselben Flasche an räumlich möglichst dicht beieinanderliegenden Positionen aufnimmt. Dadurch, dass sich die beiden Positionen, an denen die verschiedenen Inspektionsschritte durchgeführt werden, relativ nahe beieinander befinden, ist es möglich, die Kamera so einzurichten, dass in beiden Positionen möglichst scharfe Bilder aufgenommen werden können. Dies erlaubt eine einfache Konstruktion der optischen Detektion. Ein Nachführen der Kamera oder ein Nachjustieren der Kamera auf die verschiedenen Positionen hin kann so entfallen.

Im Folgenden wird eine Ausgestaltung des erfindungsgemäßen Verfahrens an zwei Ausführungsformen der erfindungsgemäßen Vorrichtung mit Hilfe der anliegenden Figuren erläutert. Dabei zeigt:
- Figur 1: eine schematische Zeichnung einer Flasche,
- Figur 2: eine vergrößerte Darstellung des Mundstücks einer Flasche,
- Figur 3: eine Darstellung einer optischen Inspektionseinheit zusammen mit einer Transporteinrichtung für Flaschen in einer schematischen Seitenansicht,
- Figur 4: eine Darstellung der Einrichtungen einer optischen Inspektionseinheit gemäß einer ersten Ausführungsform in einer schematischen Seitenansicht und
- Figur 5: eine Darstellung der Einrichtungen einer optischen Inspektionseinheit gemäß einer zweiten Ausführungsform in einer schematischen Seitenansicht.

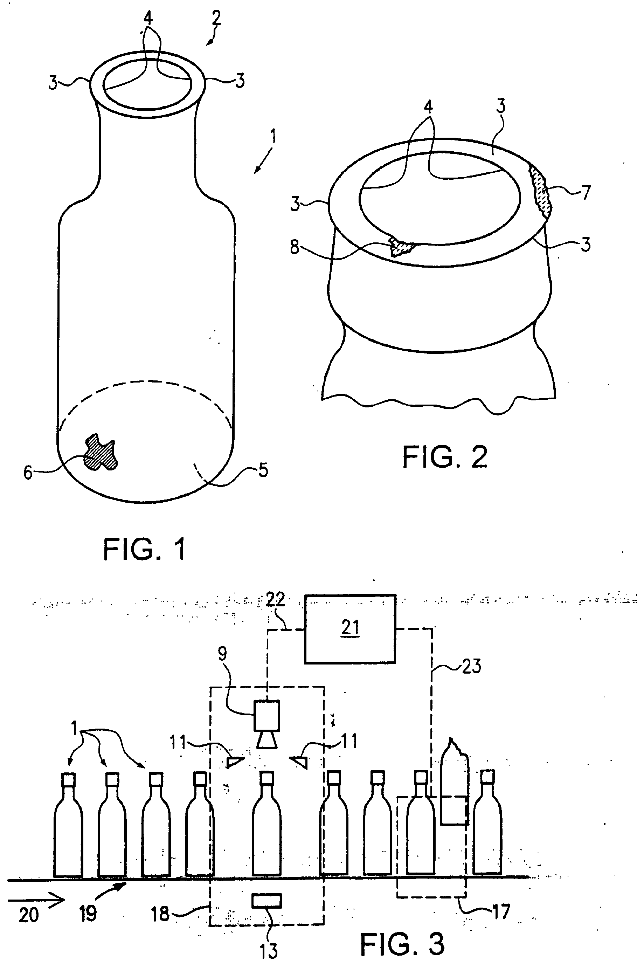

Figur 1 und Figur 2 zeigen eine Flasche 1 mit einer Mündungsdichtfläche 2 sowie einer Außenseite der Mündungsdichtfläche 3 und der Innenseite der Mündungsdichtfläche 4. Eine Verschmutzung 6 ist auf dem Flaschenboden 5 eingezeichnet. In Figur 2 ist eine Absplitterung 7 im Außenbereich der Mündungsdichtfläche sowie eine Absplitterung 8 im Innenbereich der Mündungsdichtfläche zu sehen.

Figur 3 zeigt grob vereinfacht eine optische Inspektionseinheit 18, durch die Flaschen 1 auf einer Transporteinrichtung 19 in Richtung 20 hindurch bewegt werden. Die Transporteinrichtung 19 kann als durchleuchtbares Förderband oder elastisches, seitlich an den Flaschen reibschlüssig angreifendes Riemenpaar (siehe DE29821826.7) ausgebildet sein. In der Inspektionseinheit 18 werden Bilder der Flasche 1 mit der Kamera 9 aufgenommen. Die Signale der Kamera 9 werden einer Auswerte- und Steuereinheit 21 über die Signalleitung 22 zugeführt. Die Auswerte- und Steuereinheit 21 wertet die Signale aus und steuert über eine Steuerleitung 23 eine Ausstoßstation 17, welche defekte und verschmutzte Flaschen aussortiert. Die Inspektionseinheit 18 besitzt eine CCD-Kamera 9, eine ringförmige, mittenfreie Beleuchtungseinheit 11 zur Flaschenmündungsbeleuchtung und eine unter dem Flaschenboden angeordnete Beleuchtungseinheit 13, wobei diese Elemente in der Ausführung nach Fig.1 im Wesentlichen konzentrisch zu einer gedachten Vertikalachse angeordnet sind. Die Beleuchtungseinheiten 11 und 13 können beispielsweise aus einer Vielzahl von LED's bestehen.

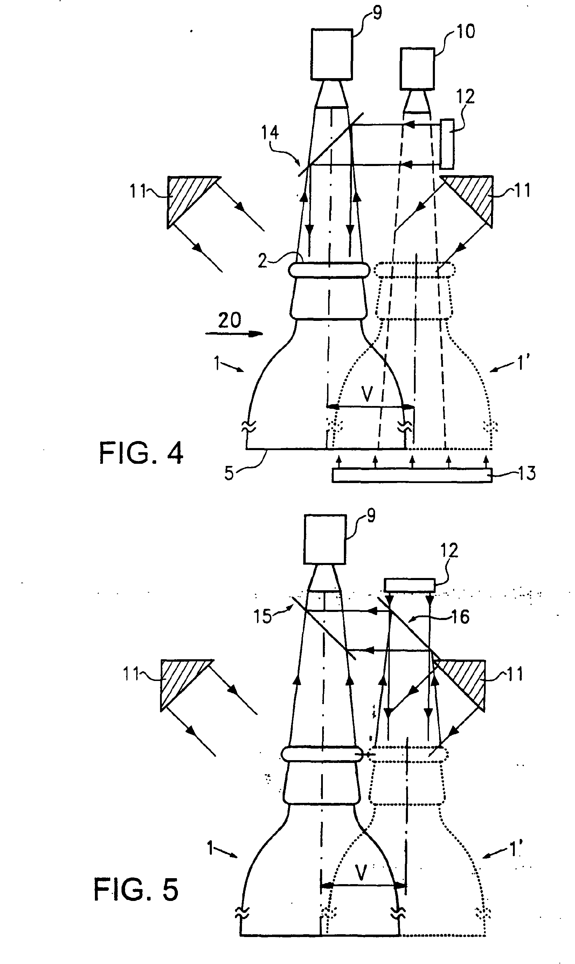

In Figur 4 ist eine mögliche Ausführungsform der erfindungsgemäßen Vorrichtung dargestellt. Eine Flasche 1 wird hierbei von einer ringförmigen Beleuchtungseinheit 11 insbesondere im Außenbereich der Mündungsdichtfläche schräg von oben beleuchtet. Eine Mündungskamera 9 nimmt ein Bild von der Mündungsdichtfläche 2 auf. Hierbei wird das Bild in etwa zentrisch durch die ringförmige Beleuchtungseinheit 11 hindurch von der Kamera 9 aufgenommen. Das Licht einer weiteren Beleuchtungseinheit 12 wird mittels eines Strahlteilers 14 senkrecht von oben in Richtung der Mündungsdichtfläche 2 gelenkt. Mittels der Kamera 9 kann auf diese Art und Weise eine Kontrolle der Innenseite der Mündungsdichtfläche stattfinden. Seitlich in Förderrichtung 20 um den Abstand V versetzt ist dieselbe Flasche 1' jedoch an einer anderen Position eingezeichnet. In dieser Position wird der transparente Flaschenboden von einer ebenfalls um den Abstand V versetzt angeordneten Beleuchtungseinheit 13 beleuchtet und mit einer Bodenkamera 10 (CCD-Kamera) ein Bild des Bodens der Flasche aufgenommen. In der dargestellten Ausführungsform geschieht auch dies durch die Öffnung der ringförmigen Beleuchtungseinheit 11 hindurch. Der Abstand V kann wenige Zentimeter bzw. Millimeter (Fig.4) oder nur Bruchteile eines Millimeters (Fig.3) betragen. In beiden Positionen befindet sich die zu prüfende Flasche 1 bzw. 1' noch annähernd vollständig innerhalb der senkrechten Projektion der Beleuchtungseinheit 11.

In Figur 5 ist eine weitere Ausführungsform der erfindungsgemäßen Vorrichtung dargestellt. Hierbei ist eine Beleuchtungseinheit 12 gezeigt, die die Flasche 1' im Wesentlichen aus einer Richtung senkrecht zu der Mündungsdichtfläche unmittelbar von oben beleuchtet. Das von der Mündungsdichtfläche ausgehende Licht wird mittels eines Strahlteilers 16 und eines weiteren Strahlteilers 15 zu der Mündungskamera 9 hingeführt. Weiterhin kann die Mündungskamera 9 durch den Strahlteiler 15 hindurch ein Bild der Flasche 1 aufnehmen, wobei hier die ringförmige Beleuchtungseinheit 11 den Außenteil der Mündungsdichtfläche beleuchtet. Bei den eingezeichneten Flaschen 1 und 1' soll es sich um ein und dieselbe Flasche handeln, die jedoch an um den Abstand V versetzten Positionen inspiziert wird. Auch in dieser Ausführungsform der erfindungsgemäßen Vorrichtung werden zwei verschiedene Bilder durch die Öffnung der ringförmigen Beleuchtungseinheit 11 hindurch aufgenommen, wobei sich die Flasche, insbesondere deren Mündungsdichtfläche, in beiden Positionen annähernd vollständig innerhalb der senkrechten Projektion von 11 befindet

Das erfindungsgemäße Verfahren wird anhand der Ausführungsformen in Figur 3 und Figur 5 wie folgt durchgeführt:

Die Flaschen 1 werden durch eine Transporteinrichtung 19 zu der optischen Inspektionseinheit 18 hingeführt. Sobald sich eine Flasche in der optischen Inspektionseinheit 18 befindet, werden verschiedene Inspektionsvorgänge durchgeführt. Die Reihenfolge der Inspektionsschritte ist hierbei beliebig. In einem ersten Schritt wird beispielsweise die Beleuchtungseinheit 11 eingeschaltet, sobald sich die Mündungsdichtfläche 2 der Flasche 1 von der Beleuchtungseinheit 11 sinnvoll beleuchten lässt, d.h. zentrisch positioniert ist. Zu diesem Zeitpunkt nimmt die Mündungskamera 9 ein Bild der Mündungsdichtfläche 2 auf. Bei diesem Inspektionsschritt wird somit insbesondere der Außenbereich der Mündungsdichtfläche untersucht. Anschließend wird die ringförmige Beleuchtungseinheit 11 ausgeschaltet und beispielsweise die Beleuchtungseinheit 12 eingeschaltet. Die Beleuchtungseinheit 12 richtet ihr Licht aus einer Richtung im Wesentlichen senkrecht zu der Mündungsdichtfläche auf diese hin. Nun kann mit der Kamera 9 ein weiteres Bild von der Mündungsdichtfläche 2 aufgenommen werden. Da die Beleuchtungseinheit 11 zu diesem Zeitpunkt bereits wieder ausgeschaltet ist, ergibt sich bei dem Bild, welches von der Kamera 9 angefertigt wird, ein hoher Kontrast. Zwischen diesen beiden ersten Inspektionsschritten kann sich die Flasche 1 durchaus leicht weiterbewegt haben. Dies ist in Abbildung 3 oder 4 nicht explizit dargestellt, jedoch insbesondere deutlich aus der Fig.5 ersichtlich (Abstand V).

Bei einer Flaschengeschwindigkeit von etwa 2 m pro Sekunde bewegt sich eine Flasche in der Zeit von 200 Mikrosekunden (Zeitintervall zwischen zwei Aufnahmen) etwa 0,4 mm weit. Dadurch ist gewährleistet, dass die Flasche 1 den Bildbereich der Kamera 9 nicht verlässt. Durch die nur geringfügige Weiterbewegung der Flasche kann weiterhin erwartet werden, ein stets scharfes Bild der Mündungsdichtfläche zu erhalten. Bei einem Teilungsabstand der Flaschen von etwa 10 cm entspricht diese Geschwindigkeit einem Durchsatz von 72000 Flaschen pro Stunden, was allen gängigen Anforderungen genügt.

Nach einer gewissen Zeit wird sich die Flasche 1 bis in die Position, wie dargestellt, als Flasche 1' weiterbewegt haben. In dieser Position kann nun eine Bodenbeleuchtungslampe 13 eingeschaltet werden und mit der Kamera 9(Fig.3) oder 10(Fig.4), welche auf den Boden der Flasche fokussiert ist, ein Bild des Bodens der Flasche aufgenommen werden. In der dargestellten Ausführungsform wird auch dieses Bild durch die ringförmige Beleuchtungseinheit 11 hindurch aufgenommen. Abschließend kann die Beleuchtungseinheit 13 nach Aufnahme des Bildes durch die Kamera 10 wieder ausgeschaltet werden.

In der dargestellten Ausführungsform der Erfindung ist es also beispielsweise möglich, die Mündungsdichtfläche sowohl innen als auch außen sowie weiterhin den Boden der Flasche in einer einzigen Inspektionseinheit 18 zu überprüfen. Bei einer angenommenen Geschwindigkeit von 2 m pro Sekunde erreicht eine weitere Flasche das Zentrum der ringförmigen Beleuchtungseinheit 11 50 Mikrosekunden nachdem die vorauslaufende Flasche das Zentrum der ringförmigen Beleuchtungseinheit 11 verlassen hat. Innerhalb von diesen 50 Mikrosekunden können somit sämtliche, für die Beurteilung der Flaschen mittels optischer Methoden möglichen Inspektionsschritte durchgeführt worden sein.

Die Beleuchtungseinheiten 11, 12 und 13 können realisiert werden durch Blitzlichtlampen, LED-Arrays, Halogenlampen, gewöhnliche Glühbirnen, Stroboskoplampen, Leuchtstoffröhren, beispielsweise auch Laserdioden, oder jede andere Art von Lichtquelle. Die Strahlteiler 14, 15 oder 16 können aus teildurchlässigen Glasplatten gefertigt sein, jedoch beispielsweise auch aus prismatischen Glaskörpern. Die Kameras 9 und 10 können beispielsweise CCD-Kameras sein, welche in sehr kurzer Zeit digitalisierbare Bilder aufnehmen und weiterleiten können.

Die mittels den Kameras 9 und 10 gewonnenen Bilder können anschließend mit einer elektronischen Auswertevorrichtung 21 in Bezug auf defekte oder verschmutzte von Flaschen ausgewertet werden.

Nach Abschluss des letzten Inspektionsschrittes bezüglich einer Flasche wird diese von der optischen Inspektionseinheit 18 weggeführt und direkt anschließend mittels einer Ausstoßstation 17 im Falle einer defekten oder verschmutzten Flasche aussortiert.

Die hier vorgestellten Verfahren eigenen sich für die optische Inspektion von Flaschen mit einer Mündung für einen Kronkorkenverschluss, einen Schraubverschluss, Weithalsflaschen sowie auch PET-Flaschen mit einem Tragring.

Mit der erfindungsgemäßen Vorrichtung zur optischen Inspektion von Flaschen ist es möglich, eine kurze und kompakte Inspektionseinheit zu konstruieren, welche die gesamte Maschinenlänge verkürzen kann. Die Verwendung von einer einzelnen Kamera zur Aufnahme mehrerer Bilder ist unter Berücksichtigung von Kostenfaktoren sehr vorteilhaft.

## Patentansprüche

1. Vorrichtung zur optischen Inspektion von Flaschen (1) mit einer Mündungsdichtfläche in einer Inspektionsstation (18), welche eine Kamera (9) zum Aufnehmen von Bildern einer Flasche (1) oder eines Flaschenteils (2,5) und eine ringförmige Beleuchtungseinheit (11), die mindestens eine Flasche (1) oder einen Flaschenteil (2) radial schräg von oben beleuchtet, sowie wenigstens eine zweite Beleuchtungseinheit (12, 13) umfasst, **dadurch gekennzeichnet, dass** die zweite Beleuchtungseinheit eine Beleuchtungseinheit zur Beleuchtung der Mündungsdichtfläche von oben im wesentlichen Senkrecht zur Mündungsdichtfläche ist und Einrichtungen für wenigstens zwei -Inspektionsschritte in der Inspektionsstation (18) derart vorgesehen sind, dass die Inspektionsschritte zu verschiedenen, möglichst dicht hintereinanderliegenden Zeiten ausgeführt werden, wobei bei einem Inspektionsschritt eine Beleuchtung der Mündungsdichtfläche (2) durch die ringförmige Beleuchtungseinheit (11) und bei dem wenigstens zweiten Inspektionsschritt die im wesentlichen senkrechte Beleuchtung der Mündungsdichtfläche (2) durch die wenigstens zweite Beleuchtungseinheit (12, 13) erfolgt.

2. Vorrichtung zur optischen Inspektion von Flaschen (1) nach Anspruch 1, wobei die Einrichtungen für mehrere Inspektionsschritte so beschaffen sind, dass an einer Flasche (1) der zeitlich letzte Inspektionsschritt abgeschlossen ist, bevor der erste Inspektionsschritt einer weiteren Flasche begonnen wird.

3. Vorrichtung zur optischen Inspektion von Flaschen (1) nach Anspruch 1 oder 2, wobei mindestens eine Kamera (9) zur Aufnahme von Bildern der Mündungsdichtfläche (2) einer Flasche (1) vorgesehen ist.

4. Vorrichtung zur optischen Inspektion von Flaschen (1) nach einem der Ansprüche 1 bis 3, wobei mindestens eine Kamera (10) zur Aufnahme von Bildern des Bodens (5) der Flasche vorgesehen ist.

5. Vorrichtung zur optischen Inspektion von Flaschen (1) nach einem der Ansprüche 1 bis 4, wobei eine Beleuchtungseinheit (13) vorgesehen ist, die teilweise oder ganz den Flaschenboden (5) beleuchtet.

6. Vorrichtung zur optischen Inspektion von Flaschen (1) nach einem der Ansprüche 1 bis 5, wobei eine Einrichtung (19) vorgesehen ist, die die Flaschen relativ zu der Inspektionsstation (18) bewegt.

7. Vorrichtung zur optischen Inspektion von Flaschen nach einem der Ansprüche 1 bis 6, wobei eine Einrichtung (19) vorgesehen ist, die die Flaschen kontinuierlich durch die Inspektionsstation (18) bewegt.

8. Vorrichtung zur optischen Inspektion von Flaschen nach einem der Ansprüche 1 bis 7, wobei eine Einrichtung (15, 16) so vorgesehen ist, dass Licht von mindestens zwei verschiedenen Positionen auf eine Kamera (9) geführt wird, so dass die Kamera (9) Bilder von Flaschen (1,1')oder Flaschenteilen (2) in verschiedenen Positionen der Vorrichtung zur optischen Inspektion (18) aufnimmt.

9. Vorrichtung zur optischen Inspektion von Flaschen (1) nach Anspruch 8, wobei die Einrichtung zum Führen von Licht mindestens einen Strahlteiler (15, 16) umfasst.

10. Vorrichtung zur optischen Inspektion von Flaschen nach einem der Ansprüche 1 bis 9, wobei mindestens zwei verschiedene Positionen für Inspektionsvorgänge so angeordnet sind, dass die zu inspizierenden Flaschen (1) oder Flaschenteile (2,5) den Bildbereich einer Kamera (9) und/oder die senkrechte Projektion einer ringförmigen Beleuchtungseinrichtung (11) nicht verlassen.

11. Vorrichtung zur optischen Inspektion von Flaschen nach einem der Ansprüche 1 bis 10, wobei eine oder zwei Kameras (9, 10) so vorgesehen sind, dass mindestens zwei Bilder von einer Flasche (1) und/oder einem Flaschenteil (2,5) aufgenommen werden und dabei der Strahlengang von der Flasche (1) und/oder dem Flaschenteil (2,5) zu der Kamera (9, 10) oder den Kameras (9, 10) hin durch eine ringförmige Beleuchtungseinheit (11) führt, welche die Mündungsdichtfläche (2) beleuchtet.

12. Verfahren zur optischen Inspektion von Flaschen mit einer Mündungsdichtfläche, welche die nacheinander erfolgenden Schritte umfasst:
Zuführen einer Flasche (1) zu einer optischen Inspektionseinheit (18),
- mindestens zwei zeitlich möglichst dicht hintereinanderliegende Inspektionsvorgänge von mindestens einer Flasche (1) mit einer Kamera (9) in der Inspektionseinheit (18), wobei bei einem Inspektionsschritt eine Beleuchtung der Mündungsdichtfläche (2) durch eine ringförmige Beleuchtungseinheit (11) radial schräg von oben und bei einem wenigstens zweiten Inspektionsschritt eine Beleuchtung der Mündungsdichtfläche von oben im wesentlichen senkrecht zur Mündungsdichtfläche durch wenigstens eine zweite Beleuchtungseinheit (12, 13) erfolgt,
Wegführen der Flasche von der optischen Inspektionseinheit (18).

13. Verfahren zur optischen Inspektion von Flaschen nach Anspruch 12, wobei die Begutachtung einer Flasche (1) bezüglich ihrer Tauglichkeit zur weiteren Verwendung mittels optischer Methoden vollständig abgeschlossen ist bevor die Begutachtung einer anderen Flasche (1) beginnt.

14. Verfahren zur optischen Inspektion von Flaschen nach einem der Ansprüche 12 oder 13, wobei die Innen- und Außenseite der Mündungsdichtfläche (2) untersucht werden.

15. Verfahren nach einem der Ansprüche 12 bis 14, wobei der Boden (5) einer Flasche untersucht wird.

16. Verfahren zur optischen Inspektion von Flaschen nach einem der Ansprüche 12 bis 15, wobei der Boden (5) der Flasche ganz oder teilweise beleuchtet wird.

17. Verfahren zur optischen Inspektion von Flaschen nach einem der Ansprüche 12 bis 16, wobei mindestens zwei Kameras (9, 10) mindestens zwei Bilder von ein und derselben Flasche (1) oder ein und demselben Flaschenteil (2) mit verschiedenen Beleuchtungen aufnehmen.

18. Verfahren zur optischen Inspektion von Flaschen nach einem der Ansprüche 12 bis 17, wobei zwei verschiedene Inspektionsschritte innerhalb von einem Zeitintervall von nicht mehr als 50 Millisekunden durchgeführt werden.

19. Verfahren zur optischen Inspektion von Flaschen nach einem der Ansprüche 12 bis 18, wobei die Flaschen (1) relativ zu der optischen Inspektionseinheit (18) bewegt werden.

20. Verfahren zur optischen Inspektion von Flaschen nach einem der Ansprüche 12 bis 19, wobei die Flaschen (1) kontinuierlich durch die optische Inspektionseinheit (18) bewegt werden.

21. Verfahren zur optischen Inspektion von Flaschen nach einem der Ansprüche 12 bis 20, wobei eine Kamera (9) mindestens zwei Bilder von ein und derselben Flasche (1) oder ein und demselben Flaschenteil (2) an verschiedenen, räumlich möglichst dicht aneinanderliegenden Positionen der Flasche innerhalb der optischen Inspektionseinheit (18) aufnimmt.

## Claims

1. Device for optically inspecting bottles (1) with a mouth sealing surface in an inspection station (18), which comprises a camera (9) for taking pictures of a bottle (1) or part of a bottle (2, 5) and a ring shaped lighting unit (11), which lights at least one bottle (1) or part of a bottle (2) radially slanting from above, and at least a second lighting unit (12, 13), **characterised in that** the second lighting unit is a lighting unit for lighting the mouth sealing surface from above essentially vertically to the mouth sealing surface and devices for at least two inspection stages are provided in the inspection station (18) in such a way that the inspection stages are carried out at different times following each other as closely as possible, in which in one inspection stage the mouth sealing surface (2) is lit by the ring shaped lighting unit (11) and in at least the second inspection stage the mouth sealing surface (2) is lit essentially vertically by at least the second lighting unit (12, 13).

2. Device for optically inspecting bottles (1) according to claim 1, in which the devices for several inspection stages are created so that chronologically the last inspection stage is concluded on one bottle (1) before the first inspection stage is started on another bottle.

3. Device for optically inspecting bottles (1) according to claim 1 or 2, in which at least one camera (9) is provided for taking pictures of the mouth sealing surface (2) of a bottle (1).

4. Device for optically inspecting bottles (1) according to one of claims 1 to 3, in which at least one camera (10) is provided for taking pictures of the bottom (5) of the bottle.

5. Device for optically inspecting bottles (1) according to one of claims 1 to 4, in which a lighting unit (13) is provided, which lights the bottom of the bottle (5) partly or completely.

6. Device for optically inspecting bottles (1) according to one of claims 1 to 5, in which a device (19) is provided which moves the bottles in relation to the inspection station (18).

7. Device for optically inspecting bottles according to one of claims 1 to 6, in which a device (19) is provided, which moves the bottles through the inspection station (18) continuously.

8. Device for optically inspecting bottles according to one of claims 1 to 7, in which a device (15, 16) is provided so that light from at least two different positions is guided onto a camera (9), so that the camera (9) takes pictures of bottles (1, 1') or parts of bottles (2) in various positions of the device for optical inspection (18).

9. Device for optically inspecting bottles (1) according to claim 8, in which the device for guiding light comprises at least one beam splitter (15, 16).

10. Device for optically inspecting bottles according to one of claims 1 to 9, in which at least two different positions for inspection processes are arranged so that the bottles (1) or parts of bottles (2, 5) to be inspected do not leave the image area of a camera (9) and/or the vertical projection of a ring shaped lighting device (11).

11. Device for optically inspecting bottles according to one of claims 1 to 10, in which one or two cameras (9, 10) are provided so that at least two pictures are taken of a bottle (1) and/or part of a bottle (2, 5) and in which the optical path of the bottle (1) and/or part of a bottle (2, 5) to the camera (9, 10) or cameras (9, 10) is guided through a ring shaped lighting unit (11), which lights the mouth sealing surface (2).

12. Method for optically inspecting bottles with a mouth sealing surface, which comprises the following successive stages:
- supplying a bottle (1) to an optical inspection unit (18),
- at least two inspection processes as close as possible after each other chronologically for at least one bottle (1) with one camera (9) in the inspection unit (18), in which in one inspection stage the mouth sealing surface (2) is lit by a ring shaped ¹lighting unit (11) radially slanting from above and in at least a second inspection stage the mouth sealing surface is lit from above essentially vertically to the mouth sealing surface by at least a second lighting unit (12, 13),
- the bottle is removed from the optical inspection unit (18).
¹ Translator's note: In the German text a hand written hyphen and number 10 appear in the margin next to the word "Beleuchtungseinheit" = "lighting unit" at this point, however it is not obvious how to logically split this into a separate claim / sub-point, therefore this has been omitted.

13. Method for optically inspecting bottles according to claim 12, in which the evaluation of a bottle (1) by means of optical methods with reference to its suitability for further use is concluded completely before the evaluation of another bottle (1) begins.

14. Method for optically inspecting bottles according to one of claims 12 or 13, in which the inside and outside of the mouth sealing surface (2) is examined.

15. Method according to one of claims 12 to 14, in which the bottom (5) of a bottle is examined.

16. Method for optically inspecting bottles according to one of claims 12 to 15, in which the bottom (5) of the bottles is lit partly or completely.

17. Method for optically inspecting bottles according to one of claims 12 to 16, in which at least two cameras (9, 10) take at least two pictures of one and the same bottle (1) or one and the same part of a bottle (2) with different lighting.

18. Method for optically inspecting bottles according to one of claims 12 to 17, in which two different inspection stages are carried out within a time interval of not more than 50 milliseconds.

19. Method for optically inspecting bottles according to one of claims 12 to 18, in which the bottles (1) are moved in relation to the optical inspection unit (18).

20. Method for optically inspecting bottles according to one of claims 12 to 19, in which the bottles (1) are moved through the optical inspection unit (18) continuously.

21. Method for optically inspecting bottles according to one of claims 12 to 20, in which a camera (9) takes at least two pictures of one and the same bottle (1) or one and the same part of a bottle (1) at different positions of the bottle as close as possible to each other spatially within the optical inspection unit (18).

## Revendications

1. Dispositif d'inspection optique de bouteilles (1) pourvues d'une surface d'étanchéité de goulot dans une unité d'inspection (18) qui comprend :
- une caméra (9) pour prendre des images d'une bouteille (1) ou d'une partie de bouteille (2, 5),
- une unité d'éclairage (11) annulaire par le haut qui éclaire au moins une bouteille (1) ou une partie de bouteille (2) de façon radialement inclinée, et
- au moins une deuxième unité d'éclairage (12, 13),
**caractérisé en ce que**
la deuxième unité d'éclairage éclaire la surface d'étanchéité de goulot par le haut, de façon essentiellement perpendiculaire à celle-ci,
des installations pour au moins deux étapes d'inspection sont prévues dans l'unité d'inspection (18) de manière à effectuer les étapes d'inspection à différents moments rapprochés,
dans une étape d'inspection on effectue un éclairage de la surface d'étanchéité de goulot (2) par l'unité d'éclairage annulaire (11), et
dans au moins une autre étape d'inspection on effectue l'éclairage essentiellement perpendiculaire de la surface d'étanchéité de goulot (2) par au moins une deuxième unité d'éclairage (12, 13).

2. Dispositif d'inspection optique de bouteilles (1) selon la revendication 1,
dans lequel les installations pour plusieurs étapes d'inspection sont conçues afin que la dernière étape d'inspection d'une bouteille (1) soit terminée avant de commencer la première étape d'inspection d'une bouteille suivante.

3. Dispositif d'inspection optique de bouteilles (1) selon la revendication 1 ou 2,
dans lequel au moins une caméra (9) prend des images de la surface d'étanchéité de goulot (2) d'une bouteille (1).

4. Dispositif d'inspection optique de bouteilles (1) selon l'une des revendications 1 à 3,
dans lequel au moins une caméra (10) prend des images du fond (5) de la bouteille (1).

5. Dispositif d'inspection optique de bouteilles (1) selon l'une des revendications 1 à 4,
dans lequel on prévoit une unité d'éclairage (13) qui éclaire le fond de bouteille (5) partiellement ou complètement.

6. Dispositif d'inspection optique de bouteilles (1) selon l'une des revendications 1 à 5,
dans lequel une installation (19) déplace les bouteilles par rapport à l'unité d'inspection (18).

7. Dispositif d'inspection optique de bouteilles selon l'une des revendications 1 à 6,
dans lequel une installation (19) déplace les bouteilles continuellement à travers l'unité d'inspection (18).

8. Dispositif d'inspection optique de bouteilles (1) selon l'une des revendications 1 à 7,
dans lequel on prévoit une installation (15, 16) de sorte que de la lumière d'au moins deux positions différentes soit amenée sur une caméra (9) afin que la caméra (9) prenne des images de bouteilles (1, 1') ou de parties de bouteille (2) dans différentes positions de l'unité d'inspection optique (18).

9. Dispositif d'inspection optique de bouteilles (1) selon la revendication 8,
dans lequel l'installation de guidage de lumière comprend au moins un séparateur de faisceaux (15, 16).

10. Dispositif d'inspection optique de bouteilles (1) selon l'une des revendications 1 à 9,
dans lequel on dispose d'au moins deux positions différentes pour des processus d'inspection, de sorte que les bouteilles (1) ou les parties de bouteille (2, 5) à contrôler ne quittent pas le champ de vision d'une caméra (9) et/ou la projection perpendiculaire d'une unité d'éclairage annulaire (11).

11. Dispositif d'inspection optique de bouteilles (1) selon l'une des revendications 1 à 10,
dans lequel une ou deux caméras (9, 10) prennent au moins deux images d'une bouteille (1) et/ou d'une partie de bouteille (2, 5) et la trajectoire des faisceaux depuis la bouteille (1) et/ou de la partie de bouteille (2, 5) vers la caméra (9, 10) ou les caméras (9, 10) traverse une unité d'éclairage annulaire (11) qui éclaire la surface d'étanchéité de goulot (2).

12. Procédé d'inspection optique de bouteilles (1) munies d'une surface d'étanchéité de goulot, comprenant les étapes successives suivantes :
- le transport d'une bouteille (1) vers une unité d'inspection optique (18),
- au moins deux processus d'inspection se succédant le plus rapidement possible d'au moins une bouteille (1) à l'aide d'une caméra (9) dans l'unité d'inspection (18), et dans une première étape d'inspection s'effectue un éclairage par le haut de la surface d'étanchéité de goulot (2) par une unité d'éclairage annulaire (11) de façon radialement inclinée, et dans au moins une deuxième étape d'inspection s'effectue un éclairage par le haut de la surface d'étanchéité de goulot de façon essentiellement perpendiculaire à la surface d'étanchéité de goulot par au moins une deuxième unité d'éclairage (12, 13),
- l'évacuation de la bouteille de l'unité d'inspection optique (18).

13. Procédé d'inspection optique de bouteilles selon la revendication 12,
dans lequel le contrôle d'une bouteille (1) quant à son aptitude à une utilisation ultérieure est complètement terminé au moyen de méthodes optiques avant de commencer le contrôle d'une autre bouteille (1).

14. Procédé d'inspection optique de bouteilles selon l'une des revendications 12 ou 13,
dans lequel on contrôle la face intérieure et la face extérieure de la surface d'étanchéité de goulot (2).

15. Procédé selon l'une des revendications 12 à 14,
dans lequel on contrôle le fond (5) d'une bouteille.

16. Procédé d'inspection optique de bouteilles selon l'une des revendications 12 à 15,
dans lequel on éclaire le fond (5) de la bouteille complètement ou partiellement.

17. Procédé d'inspection optique de bouteilles selon l'une des revendications 12 à 16,
dans lequel au moins deux caméras (9, 10) prennent au moins deux images d'une même bouteille (1) ou d'une même partie de bouteille (2) avec des éclairages différents.

18. Procédé d'inspection optique de bouteilles selon l'une des revendications 12 à 17,
dans lequel on exécute deux étapes d'inspection différentes dans un intervalle de temps inférieur à 50 millisecondes.

19. Procédé d'inspection optique de bouteilles selon l'une des revendications 12 à 18,
dans lequel on déplace les bouteilles (1) par rapport à l'unité d'inspection optique (18).

20. Procédé d'inspection optique de bouteilles selon l'une des revendications 12 à 19,
dans lequel on déplace les bouteilles (1) continuellement à travers l'unité d'inspection optique (18).

21. Procédé d'inspection optique de bouteilles selon l'une des revendications 12 à 20,
dans lequel une caméra (9) prend au moins deux images d'une même bouteille (1) ou d'une même partie de bouteille (2) dans différentes positions rapprochées le plus possible de la bouteille à l'intérieur de l'unité d'inspection optique (18).
